# EUROPEAN PATENT SPECIFICATION

(11) **EP 0 551 379 B1**
(45) Date of publication and mention of the grant of the patent: **11.06.1997**
(21) Application number: 91918075.2
(22) Date of filing: 19.03.1991
(51) Int. Cl.: H04N 3/20

(54) **BEAM CURRENT LIMITING ARRANGEMENT HAVING A PEAK AMPLITUDE RESPONSIVE THRESHOLD**
Anordnung zur Strahlstrombegrenzung mit einem von der Spitzenamplitude abhängigen Schwellenwert
Dispositif de limitation de courant de faisceau ayant un seuil dépendant d'une amplitude de pic

(30) Priority: 20.03.1990 GB 90062506
(43) Date of publication of application: 21.07.1993
(73) Proprietor: RCA Thomson Licensing Corporation, Princeton New Jersey 08540 (US)
(72) Inventor: HAFERL, Peter, Eduard, CH-8134 Adliswil (CH)
(74) Representative: Einsel, Robert, Dipl.-Ing.
(86) International application number: US9101808
(87) International publication number: WO9115080

(56) References cited:
- EP-A- 0 149 334
- US-A- 4 167 025
- US-A- 4 599 642
- US-A- 4 633 320

## Description

### Field of Invention

The present invention pertains to a beam current limiting arrangement such as may be employed in a television receiver or display monitor.

### Background of the Invention

Conventional color television receivers and display monitors usually include an average beam current limiter for the protection of the picture tube and the high voltage circuitry. When the average beam current exceeds a predetermined maximum amplitude of, for example, 1.4 milliamperes (ma), the contrast and/or brightness of the reproduced image is decreased by the beam limiter to avoid a further increase of the beam current.

EPO patent EP-A-0149334 shows a beam current limiting arrangement which includes a beam limiter control network operatively associated with the high voltage resupply system, and apparatus wherein a derived signal, representative of the combined instantaneous magnitudes of plural color image signals intended to be applied to the image display device, is compared to a fixed threshold level. If the derived signal exceeds the threshold level, the compared signal is detected and used to limit the magnitude of color signals applied to the display device.

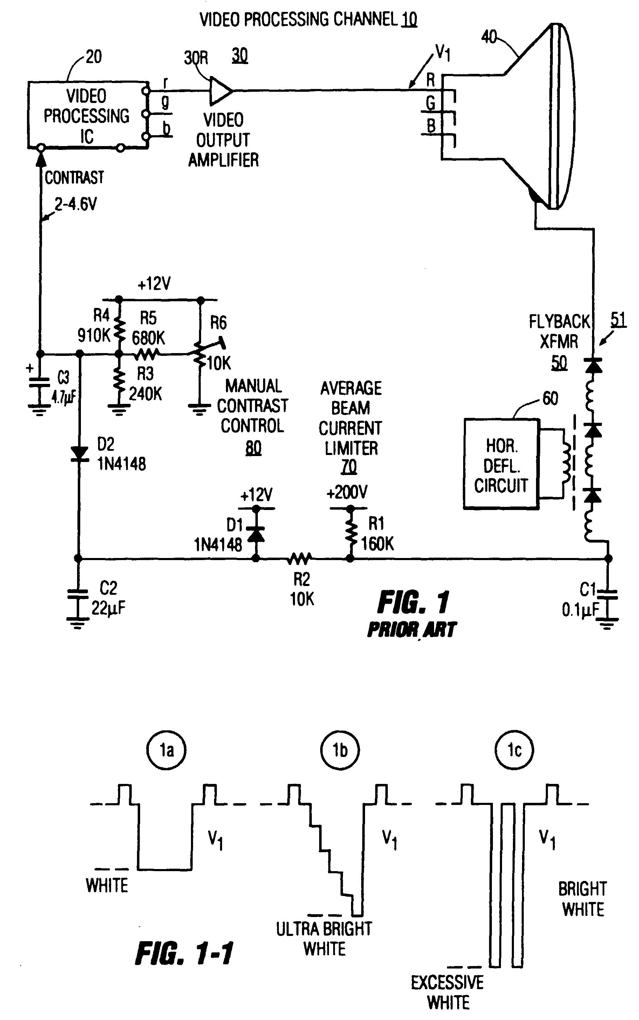

Figure 1 shows the circuit diagram of a television receiver including a commonly employed average beam current limiter. In a video signal processing channel 10, low level red (r), green (g), and blue (b) color video signals provided by a video signal processing circuit 20 are amplified by respective picture tube (or kinescope) drive amplifiers, generally indicated by reference number 30, to produce high level red (R), green (G), and blue (B) color video signals suitable for directly driving respective cathodes of a picture tube (or kinescope) 40. Although there are three drive amplifiers, one for each color, only drive amplifier 30R for producing the high level red (R) color video signal is shown for simplicity. As is indicated in Figure 1, low level video signal processing circuit 20 may comprise an integrated circuit (IC), such as the TDA 3562 or TDA 3506 IC, available from Philips of The Netherlands. A high supply voltage for picture tube 40 is developed at the high potential end of a high voltage winding 51 of a horizontal flyback transformer 50 in response to horizontal deflection signals generated by a horizontal deflection circuit 60.

Beam limiting arrangement 70 of the television receiver shown in Figure 1 is of the conventional type which responds to the average beam current drawn by picture tube 40. Specifically, the beam current of a picture tube 40 is sensed (or "sampled") at the junction of a resistor R1 and a capacitor C1 coupled to the low potential end of high voltage winding 51 of horizontal flyback transformer 50. Resistor R1 and a relatively high voltage supply (e.g., +200 volts) form a constant current source from which current flowing to picture tube 40 through high voltage winding 51 of flyback transformer 50 is drawn. Capacitor C1 serves to remove horizontal rate signal components. The sense point is coupled to the contrast control input of the video signal processing circuit 20 through a low pass filter circuit including a resistor R2 and a capacitor C2 and a switching diode D2. A manual contrast control circuit 80, illustratively shown as including resistors R3, R4 and R5, a potentiometer R6 and a filter capacitor C3, is also coupled to the contrast control input of the video processing circuit 20. A diode D1 clamps the junction of capacitor C2 and diode D2 to a relatively low voltage (e.g., +12 volts) and therefore protects capacitor C2 and diode D2 from the relatively high supply voltage (e.g., +200 volts) which might otherwise be applied to them at relatively low beam currents.

In operation, diode D1 is conductive and diode D2 is non-conductive at low beam currents. The voltage developed across capacitor C1 decreases toward zero as the average beam current increases. Protection diode D1 is rendered non-conductive and thereafter switching diode D2 is rendered conductive as the beam current increases. After switching diode D2 is rendered conductive, the contrast control voltage is decreased as a function of beam current and, in turn, the beam current is also decreased. Diode D2 is rendered conductive when its cathode voltage falls approximately 0.7 volts below its anode voltage. The anode voltage is equal to the contrast control voltage. The point at which diode D2 is rendered conductive and average beam current limiter 70 is activated to reduce the contrast is referred to as the "threshold" or "delay" of average beam current limiter 70. The "threshold" or "delay" of average beam current limiter 70 shown in Figure 1 is determined by the value of resistor R1 and is fixed.

The rather low dynamic range of a picture tube may cause an overload problem when only the average beam current is limited as in the television receiver shown in Figure 1. This is illustrated by the waveforms shown in Figure 1-1.

Waveform la represents a video signal (V₁) for producing a large white window. Such a window results in a high amount of average beam current which puts the beam limiter into operation. Waveforms 1b and 1c show video signals producing the same amount of average beam current as the signal of waveform 1a because their envelopes cover same area. Assuming the identical contrast setting as for waveforms 1a, 1b and 1c, the staircase signal of waveform 1b produces an ultra bright picture portion, while waveform 1c produces bars of excessive brightness and hot spots on the picture tube mask. Such hot spots may cause the mask to deform in what is sometimes referred to as mask "doming". Thus, the contrast setting for waveform 1c should be lower than for waveform la. Unfortunately, beam current limiting arrangement 70 shown in Figure 1 cannot differentiate between waveforms 1a, 1b and 1c shown in Figure 1-1. This is so because the beam current is averaged by the aquadag capacitor of picture tube 40 (i.e., the capacitor formed between the inner and outer coatings of picture tube 40) and the voltage developed across capacitor C1 is related to the current which recharges the aquadag capacitor through high voltage winding 51 during horizontal retrace. The actual beam current is the sum of currents flowing through the electron guns of picture tube 40.

### Summary of the Invention

The invention is as set out in claim 1. The subclaims relate to preferred embodiments. Particularly, the invention is concerned with a non-linear beam current limiter which adapts the contrast setting to the video signal content. More specifically, according to an aspect of the present invention, a beam current limiting arrangement comprises a peak detector which senses a video signal related to the cathode currents of the picture tube and which controls the threshold of an average beam current limiter of the type shown in Figure 1. Preferably, the peak detector includes cathode current sensing elements coupled between the picture tube drive amplifiers and the cathodes of the picture tube and advantageously are the same elements which are used to sense the cathode currents during a test interval in which, for example, automatic black level adjustments are made. In a beam current limiting arrangement constructed in accordance with the present invention. the threshold for the average beam current limiter is lowered when excessively bright peak picture portions are present. The threshold for the average beam limiter is unaffected when excessively bright white peak picture portions are absent. Such a beam current limiting arrangement allows a television receiver or display monitor to be operated at high contrast levels without overloading the picture tube and avoids hot spots on the picture tube mask which may cause mask doming.

### Brief Description of the Drawing

The present invention will be described with reference to an accompanying Drawing in which:
Figure 1, previously discussed, shows a circuit diagram of a television receiver including an average beam current limiter as is known in the prior art;
Figure 1-1, also previously discussed, shows waveforms of various video signals useful in understanding problems of the average beam current limiter shown in Figure 1;
Figure 2 shows a circuit diagram of a television receiver including a non-linear beam current limiting arrangement constructed in accordance with the present invention: and
Figure 2-2 shows waveforms of various video signals useful in understanding advantages of the non-linear beam current limiting arrangement shown in Figure 2.

In the various Figures, corresponding elements are identified in the same or similar manner and certain device types, component values and voltage and current levels are indicated to facilitate an understanding of the invention by way of example.

### Detailed Description of the Drawing

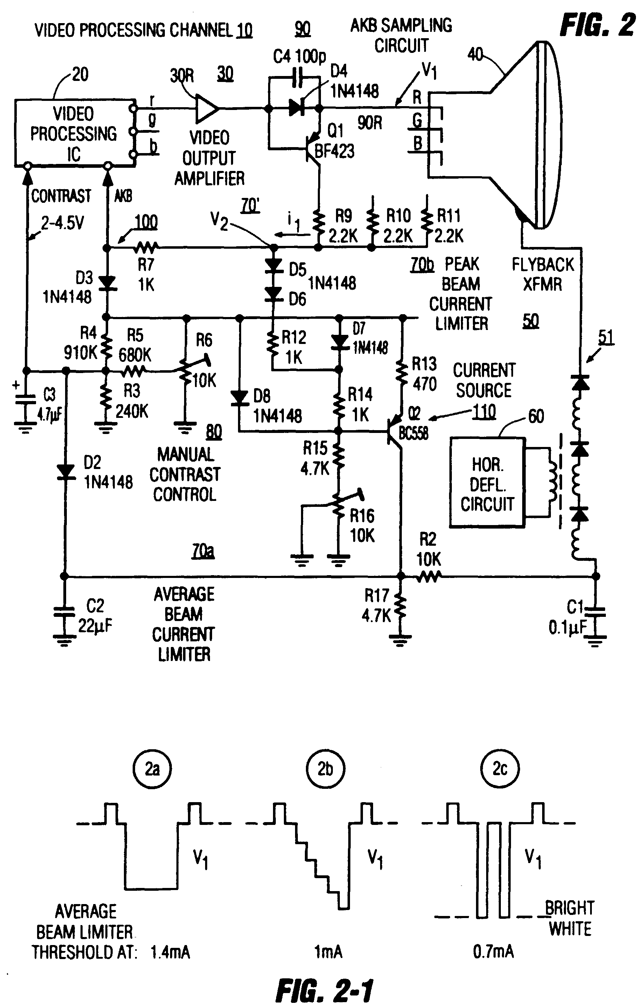

The television receivers shown in Figures 1 and 2 are similar with the exception of the beam current limiting arrangements. Accordingly, as indicated above, corresponding elements are identified in the same or similar manner. Basically, beam current limiting arrangement 70' shown in Figure 2, in accordance with an aspect of the present invention, in addition to an average beam current limiter 70a similar to the one shown in Figure 1 for reducing the contrast when the average beam current exceeds a threshold, also includes a peak beam current limiter 70b for controlling the threshold of average beam current limiter 70a in response to the the actual beam current drawn by picture tube 40.

The actual beam current is sensed utilizing circuits 90 coupled between picture tube drive amplifiers 30 and respective cathodes of picture tube 40. One current sensing circuit is required for each of the three cathodes of picture tube 40. However, only one cathode current sensing circuit 90R associated with the the red (R) color video signal is shown for simplicity. Cathode current sensing circuit 90R comprises of an emitter-follower configured transistor Q1 and base-emitter by-pass circuit including a capacitor C4 and and a diode D4 required for driving the cathode capacity. A current substantially equal to the red cathode current flows through resistor R9 connected to the collector of transistor Q1. Similarly, currents substantially equal to the blue and green cathode currents flow through resistors R10 and R11, respectively. The red, green and blue cathode currents are summed to produce a current i₁. The current i₁ is used to control the threshold of average beam current limiter 70a as will be described in detail below.

Advantageously, cathode current sensing elements 90 are the same elements which are utilized for sensing the cathode currents of picture tube 40 during an adjustment interval in order to automatically adjust parameters such as the black level the reproduced image. Systems for automatically adjusting the black level of the reproduced image are well known and typically are included in part in video signal processing ICs such as the TDA 3506 and TDA 3562. Such systems are sometimes referred to as AKB (automatic kinescope biasing) systems.

Briefly, an AKB system operates by inserting a test pulse corresponding to the desired black level of the reproduced image into each of the red, blue and green video signal channels during respective sequential horizontal line intervals, such as line intervals 22, 23 and 24, of the vertical blanking interval. The test pulses do not produce visible artifacts because the test pulses occur during line intervals in the "overscan" region of the picture tube which is not visible to viewers. The test pulses are not produced at times other than during the AKB interval. Each of the cathode currents which are sequentially produced during the AKB interval is sensed by a respective one of cathode current sensing circuits 90 and coupled via a respective one of resistors R9, R10 and R11 and a resistor R7 associated with the beam current limiting operation to an AKB input terminal of IC 20. Each sensed cathode current is converted to a respective voltage by virtue of a relatively high valued resistor (not shown) within IC 20. The voltage is compared to a reference voltage within IC 20 and a resultant comparison signal is used to set the black level of the respective video signal.

During the AKB interval, current i₁ flowing to the AKB input terminal of IC 20 corresponds to a single "black level" cathode current and is therefore very low. Accordingly, the internal resistor of IC 20 for developing the voltage which is compared to the AKB reference voltage has to have a relatively high resistance value in order to develop a sufficiently high voltage for comparison. During active image intervals, current i₁ represents the sum of the cathode currents and is typically much larger than it is during the AKB interval. As a result. a relatively high voltage may be developed across the internal cathode current sensing resistor which may damage IC 20. A sampling circuit 100 including a resistor R7 and a diode D3 is provided to develop a voltage v₂ which is proportional to current i₁ while protecting IC 20 during active image intervals. The voltage v₂ is converted to a current which determines the threshold of average beam current limiter 70a by a controllable current source 110 including a transistor Q2, diodes D5, D6, and D7, resistors R12, R13. R14 and R15, and potentiometer R16. More specifically, the current supplied through the collector of transistor Q2 divides between the resupply current flowing to capacitor C1 through resistor R2 and the current flowing through resistor R17. Diode D2 is rendered conductive when the voltage at its cathode falls approximately 0.7 volts below the voltage at its anode. The voltage at the cathode of diode D2 is determined by the current flowing through resistor R17. The current flowing through resistor R17 is the difference between the current supplied by transistor Q2 and the resupply current of picture tube 40 flowing through high voltage winding 51 of flyback transformer 50. Therefore, the current supplied by transistor Q2 determines the level of average beam current at which diode D2 is rendered conductive and therefore the threshold of average beam current limiter 70a.

In beam current limiting arrangement 70', a diode D8 is coupled between the base of transistor Q2 and the +12 volt supply line in order to protect transistor Q2 from reverse base-to-emitter breakdown voltages which may be developed when the aquadag capacitor of picture tube 40 is initially charged.

In beam current limiting arrangement 70' shown in Figure 2, a diode corresponding to diode D1 of beam current limiting arrangement 70 shown in Figure 1 is not needed since its protection function is performed by current source 110. More specifically, at low beam currents, the voltage developed at the cathode of diode D2 is limited by the current supplied by current source 110.

In operation, during the AKB interval, when current i₁ is low. the voltage developed at the junction of resistor R7 and the internal sampling resistor within IC 20 is below +12 volts. As a result, diodes D3, D5 and D6 are reverse biased and therefore non-conductive. As a result, all of current i₁ flows to the AKB input terminal of IC 20.

During the active image interval, current i₁ represents the sum of the cathode currents and may increase to the point at which peak beam current limiting action occurs as follows. Diode D7 is forward biased and therefore conductive at low levels of current i₁ and remains so until the current i₁ reaches a threshold value determined by resistors R14 and R15 and potentiometer R16. As long as diode D7 is conductive, the base voltage of transistor Q2 remains substantially constant. Consequentially the emitter and collector currents of transistor Q2 and therefore the threshold of average beam current limiter 70a remain substantially constant. When current i₁ increases to the point at which a voltage slightly (by approximately 0.7 volts) greater than +12 volts is developed at the junction of resistor R7 and the internal sampling resistor within IC 20, diodes D3, D5 and D6 are rendered conductive. However, diode D7 remains conductive. At this time, the voltage at the AKB terminal of IC20 is clamped to approximately +12.7 volts. Current i₁ divides equally between the path including resistor R7 and the path including resistor R12 since diode D5 compensates for diode D3, diode D6 compensates for diode D7 and resistor R12 has the same value as resistor R7. Diode D7 is rendered non-conductive when the voltage at the junction of resistor R12 and resistor R14 reaches approximately +12 volts or, viewed another way, when the current flowing through resistor R12 substantially equals the current flowing through resistor R14. Thereafter, the base voltage of transistor Q2 is allowed to increase as the current i₁ increases. As the base voltage of transistor Q2 increases, the collector current decreases and consequentially the threshold of average beam current limiter 70a also decreases. The collector current of transistor Q2 and the threshold of average beam current limiter 70a continue to decrease until current i₁ increases to the point at which the base voltage of transistor Q2 is slightly greater than +12 volts and diode D8 is rendered conductive. Thereafter, the collector current of transistor Q2 and the threshold of average beam current limiter 70a are substantially zero.

By way of numerical example, assume that contrast potentiometer R6 is set to produce the maximum contrast control voltage of +4.5 volts so as to produce maximum contrast and that it is desired that the average beam current limiter 70a is to be activated when 1.4 milliamperes (ma) of average beam current is drawn. Under these circumstances, since the voltage at the anode of diode D2 is +4.5 volts, diode D2 will be rendered conductive when the voltage developed across resistor R17 decreases to approximately +3.8 volts (+4.5 volts - 0.7 volts). The latter corresponds to a current of approximately 0.8 ma (3.8 volts/4.7 kohm) flowing through resistor R17. Therefore, the collector current of transistor Q2 should be set to 2.2 ma (0.8 ma +1.4 ma) before peak beam current limiter 70b is activated because diode D2 is to be rendered conductive when the the current flowing through resistor R17 is 0.8 ma and the current drawn through resistor R2 is 1.4 ma. A collector current of 2.2 ma causes a voltage drop across emitter resistor R13 of approximately 1 volt (2.2 ma x 470 ohm). Until peak beam current limiter 70b is activated, diode D7 is conductive and the voltage drop across it compensates for the base-emitter voltage drop of transistor Q2. Accordingly, potentiometer R16 should be adjusted so that a voltage drop of 1 volt is developed across resistor R14 (1 kohm) to establish a average beam current threshold of 1.4 ma before peak beam current limiter is activated. Under these circumstances, diode D7 will be rendered conductive when the current (1/2 i₁) flowing through diodes D5 and D6 and resistor R12 increases to 1 ma or current i₁ increases to 2 ma. If peak beam current representative current i₁ increases beyond 2 ma, the collector current of transistor Q2, and consequentially the threshold of average beam current limiter 70b, will decrease.

The above described non-linear beam current limiting operation is graphically illustrated by waveforms 2a, 2b and 2c shown in Figure 2-1. For the waveforms shown in Figure 2-1, it is assumed that contrast control potentiometer R6 is set to produce the highest contrast (i.e., the wiper arm of potentiometer R6 is set to provide a contrast control voltage of +4.5 volts). Waveform 2a corresponds to the display of a large white window. It is assumed that beam limiter threshold control potentiometer R16 has been adjusted so that the average beam current is limited at 1.4 mA when waveform 2a is produced. Peak beam current representative current i₁ is about 25% higher than the average beam current because current i₁ is substantially equal to zero during the blanking intervals. Thus, current i₁ is substantially equal to 1.8 mA when waveform 2a is produced and beam current limiting arrangement 70' operates in its linear range because peak beam limiter 70b has not been activated. When waveform 2b is produced, current i₁ increases during the white peak of the staircase waveform. This causes diode D7 to become non-conductive, resulting in a reduction of the collector current of transistor Q2 and, therefore, the threshold of average beam current limiter 70a to, for example, about 1 mA. As a result, average beam current is limited at 1 mA. The amplitude of current i₁ is even higher at the peak of waveform 2c. This causes a further decrease of the collector current of transistor Q2 and, therefore, the threshold of average beam current limiter 70a to, for example, about 0.7 mA. As a result, the average beam current is limited at a relatively low value of 0.7 mA.

Thus, the amplitude of the cathode drive voltages (V1) are controlled by automatically shifting the threshold of the average beam current limiter, as is indicated by waveforms 2a, 2b and 2c in Figure 2-1, in order to make the response of beam current limiting arrangement 70' to video signals corresponding to relatively large areas and to video signals corresponding to relatively small areas more uniform. This avoids the need for a manual contrast adjustment compromise to account for the differences between signals having waveforms such as 2a and 2c and allows the television receiver or monitor to be operated at high contrast levels without blooming or potentially damaging hot spots.

It is noted that full screen multiburst signal such as those corresponding to text may produce an overproportional decrease of the threshold of average beam current 70a. This is caused by the charge currents for the cathode capacitances. The charge currents contribute to current i₁, resulting in a decreased contrast. This may be a desirable effect to improve readability when full screen text is displayed.

It is furthermore noted that beam current limiting arrangement 70' combines the control functions of average beam current limiter 70a and peak current limiter 70b in an interdependent fashion. More specifically, potentiometer R16 determines the thresholds (or delays) for both average beam current limiter 70a and peak beam current limiter 70b. As a result, the thresholds automatically track each other. For example, adjusting potentiometer R16 to provide 2 mA threshold for average beam current limiter 70a results in a 2.6 mA threshold for peak current limiter 70b. Such tracking relationship is desirable because component tolerances and the use of different picture tubes in a chassis may necessitate threshold adjustments. It will be understood that various modifications may be made to the described embodiment.

For example, while the beam current is limited by controlling the contrast of the image in the described embodiment. the beam current may also be reduced by controlling the brightness of the image, either in conjunction with contrast or alone.

In addition, while the AKB sensing circuitry is advantageously used to also sense the actual beam current drawn by the picture tube, other sense circuitry may be used for this purpose. For example, it is possible to use the low level red (r), green (g) and blue (b) video signals. However, use of these signals may only produce an approximation of the actual beam currents since they do not represent adjustments made within picture tube drive amplifiers 30 to account for picture tube tolerances. Therefore it is preferable to sense the cathode currents directly at the cathodes.

Furthermore, while the amplitude of all three color signals are sensed in the preferred embodiment of the invention, it is possible to sense less than all three of the color signals, e.g., only the green color signal which most closely corresponds to the luminance information. However, such a sensing arrangement will not produce an accurate representation of the actual beam current since the actual beam current corresponds to the sum of the three cathode currents.

## Claims

1. A beam current limiting apparatus for use in a display system, apparatus comprising:
a video signal processing channel (20, 30) for processing a video input signal to produce an video output signal suitable for display;
a power supply (50, 51, 60);
an image display device (40) coupled to said video signal processing channel (20, 30) and to said power supply (50, 51, 60) and drawing current from said power supply in response to said video output signal;
means (70a) coupled to said power supply for sensing the average current drawn by said display device from said power supply (50, 51, 60);
means (20, 70a) coupled between said video signal processing channel (20, 30) and said average current sensing means (70a) for reducing an image property determining characteristic of said video output signal when said average current drawn by said display device from said power supply (50, 51, 60) exceeds a controllable threshold;
means (90) coupled to said video signal processing channel (20, 30) for sensing the amplitude of said video output signal; and characterized by
means (70b) coupled to said reducing means (20, 70a) for setting said threshold of said reducing means (20, 70a) in response to the amplitude of video output signal.

2. The apparatus defined in Claim 1, characterized in that:
said display device (40) is coupled to a first terminal (51) of said power supply (50, 51, 60);
said average current sensing means (70a) includes a filter circuit (R2, C2) coupled to a second terminal of said power supply (50, 51, 60) for filtering a current supplied to said display device (40); and
said threshold setting means (70b) includes a controllable current source (110) responsive to the amplitude of said video output signal and coupled to said filter circuit to supply current to said filter circuit.

3. The apparatus defined in Claim 1, characterized in that:
said display device (40) is a picture tube including at least one cathode (R, G, B);
said video signal processing channel (20, 30) includes a picture tube drive amplifier (30) coupled to said cathode (R, G, B) for producing said video output signal so that it is suitable for directly driving said cathode of said picture tube (40);
said video signal sensing means (90) includes a current sensing element (D4) coupled to said cathode (R, G, B); and
said threshold setting means (70b) is responsive to the current sensed by said current sensing means (D4) for setting said threshold of said reducing means (70a).

4. The apparatus defined in Claim I, characterized in that:
said display device (40) is a color picture tube including three cathodes (R, G, B);
said video signal processing channel (20, 30) includes three picture tube drive amplifiers (30) coupled to respective ones of said cathodes (R, G, B) for producing three respective color video output signals suitable for directly driving respective ones of said cathodes of said picture tube (40);
said video signal sensing means (90) includes three current sensing elements (D4) coupled to respective ones of cathodes of said picture tube; and
said threshold setting means (70b) is responsive to a combination of the three cathode currents sensed by said current sensing elements (D4) for setting said threshold of said reducing means (70a).

5. The apparatus defined in Claim 1, characterized in that:
said display device (40) is a picture tube including at least one cathode (R, G, B);
said video signal processing channel (20, 30) includes a picture tube drive amplifier (30) coupled to said cathode (R, G, B) for producing said video output signal so that it is suitable for directly driving said cathode of said picture tube (40);
said video signal processing channel (20, 30) also includes means for setting said video output signal to a predetermined test level during a test interval; means (90) coupled to said cathode for sensing the current flowing to said cathode during said test interval; and means (20, 70) for adjusting a characteristic of said video output signal in response to the cathode current sensed during said test interval;
said video signal sensing means (90) comprises said means coupled to said cathode for sensing the current flowing to said cathode during said test interval; and
said threshold setting means (70b) is responsive to the current sensed by said cathode current sensing means during times other than said test interval for setting said threshold of said reducing means.

6. The apparatus defined in Claim 1, characterized in that:
said picture tube (40) is a color picture tube including three cathodes;
said video signal processing channel (20, 30) includes three picture tube drive amplifiers (30) coupled to respective ones of said three cathodes (R, G, B) for producing three respective color video output signals suitable for directly driving respective ones of said three cathodes (R, G, B) of said picture tube (40);
said video signal processing channel (20, 30) includes means for setting said three color video output signals to respective test levels during a test interval; three means coupled to respective ones of said three cathodes (R, G, B) for sensing three respective cathode currents during said test interval; and means (20, 70) for adjusting a characteristic of said three color video output signals in response to said three respective cathode currents sensed during said test interval;
said video signal sensing means (90) includes said three cathode current sensing means (D4); and
said threshold setting means (70b) is responsive to a combination of said three cathode currents sensed by said cathode current sensing means during times other than said test interval for setting the threshold of said reducing means.

7. The apparatus defined in Claim 1, characterized in that:
said image property determining characteristic of said video output signal is the peak to peak amplitude of said video output signal and said image property is contrast.

## Patentansprüche

1. Strahlstrom-Begrenzungsanordnung zur Verwendung in einem Anzeigesystem, umfassend:
einen Videosignal-Verarbeitungskanal (20, 30) zur Verarbeitung eines Video-Eingangssignals, um ein für die Anzeige geeignetes Video-Ausgangssignal zu erzeugen;
eine Stromversorgung (50, 51, 60);
eine Bildanzeigevorrichtung (40), die mit dem Videosignal-Verarbeitungskanal (20, 30) und der Stromversorgung (50, 51, 60) verbunden ist und in Abhängigkeit von dem Video-Ausgangssignal Strom von der Stromversorgung zieht;
mit der Stromversorgung verbundene Sensormittel (70a) für den durch die Anzeigevorrichtung von der Stromversorgung (50, 51, 60) gezogenen Durchschnittsstrom;
Mittel (20, 70a), die zwischen dem Videosignal-Verarbeitungskanal (20, 30) und den den Durchschnittsstrom erfassenden Mitteln (70a) liegen, um ein die Bildeigenschaft bestimmendes Merkmal des Video-Ausgangssignals zu reduzieren, wenn der durch die Anzeigevorrichtung von der Stromversorgung (50, 51, 60) gezogene Strom einen steuerbaren Schwellwert überschreitet;
mit dem Videosignal-Verarbeitungskanal (20, 30) verbundene Sensormittel (90) für die Amplitude des Video-Ausgangssignals, **gekennzeichnet durch** Mittel (70b), die mit den Reduzierungsmitteln (20, 70a) verbunden sind, um den Schwellwert der Reduzierungsmittel (20, 70a) in Abhängigkeit von der Amplitude des Video-Ausgangssignals einzustellen.

2. Anordnung nach Anspruch 1, **dadurch gekennzeichnet**,
daß die Anzeigevorrichtung (40) mit einem ersten Anschluß (51) der Stromversorgung (50, 51, 60) verbunden ist;
daß die den Durchschnittsstrom erfassenden Mittel (70a) eine Filterschaltung (R2, C2) enthalten, die mit einem zweiten Anschluß der Stromversorgung (50, 51, 60) verbunden ist, um einen der Anzeigevorrichtung (40) zugeführten Strom zu filtern;
und daß die Schwellwert-Einstellmittel (70b) eine steuerbare Stromquelle (110) enthalten, die auf die Amplitude des Video-Ausgangssignals anspricht und mit der Filterschaltung verbunden ist, um der Filterschaltung Strom zuzuführen.

3. Anordnung nach Anspruch 1, **dadurch gekennzeichnet**,
daß die Anzeigevorrichtung (40) eine Bildröhre mit wenigstens einer Kathode (R, G, B) ist:
daß der Videosignal-Verarbeitungskanal (20, 30) einen Bildröhren-Ansteuerverstärker (30) enthält, der mit der Kathode (R, G, B) verbunden ist, um das Video-Ausgangssignal so zu erzeugen, daß es für die direkte Ansteuerung der Kathode der Bildröhre (40) geeignet ist;
daß die Sensormittel (90) für das Videosignal ein Strom-Sensorelement (D4) enthalten, das mit der Kathode (R, G, B) verbunden ist; und
daß die Schwellwert-Einstellmittel (70b) auf den von den Strom-Sensormitteln (D4) erfaßten Strom ansprechen, um den Schwellwert der Reduzierungsmittel (70a) einzustellen.

4. Anordnung nach Anspruch 1, **dadurch gekennzeichnet**,
daß die Anzeigevorrichtung eine Farbbildröhre mit drei Kathoden (R, G, B) ist;
daß der Videosignal-Verarbeitungskanal (20, 30) drei Bildröhren-Ansteuerverstärker (30) enthält, die jeweils mit einer der Kathoden (R, G, B) verbunden sind, um drei Farb-Video-Ausgangssignale zu erzeugen, die zur direkten Ansteuerung jeweils einer Kathode der Bildröhre (40) geeignet sind;
daß die Videosignal-Sensormittel (90) drei Strom-Sensorelemente (D4) enthalten, die jeweils mit einer entsprechenden Kathode der Bildröhre verbunden sind; und
daß die Schwellwert-Einstellmittel (70b) auf eine Kombination der drei Kathodenströme ansprechen, die von den Strom-Sen-sorelementen (D4) erfaßt werden, um den Schwellwert der Reduzierungsmittel (70a) einzustellen.

5. Anordnung nach Anspruch 1, **dadurch gekennzeichnet**,
daß die Anzeigevorrichtung (40) eine Bildröhre mit wenig stens einer Kathode (R, G, B) ist;
daß der Videosignal-Verarbeitungskanal (20, 30) einen Bildröhren-Ansteuerverstärker (30) enthält, der mit der Kathode (R, G, B) verbunden ist, um das Video-Ausgangssignal so zu erzeugen, daß es für die direkte Ansteuerung der Kathode der Bildröhre (40) geeignet ist;
daß der Videosignal-Verarbeitungskanal (20, 30) auch enthält: Mittel zur Einstellung des Video-Ausgangssignals auf einen vorgegebenen Test-Pegel während eines Test-Intervalls; mit der Kathode verbundene Mittel (90) zur Erfassung des während des Test-Intervalls zu der Kathode fließenden Stroms; und Mittel (20, 70) zur Einstellung einer Eigenschaft des Video-Ausgangssignals in Abhängigkeit von dem während des Test-Intervalls erfaßten Kathodenstrom;
daß die Videosignal-Sensormittel (90) die mit der Kathode verbundenen Mittel umfassen, um den während des Test-Intervalls zur Kathode fließenden Strom zu erfassen; und
daß die Schwellwert-Einstellmittel (70b) auf den Strom ansprechen, der von den Kathodenstrom-Sensormitteln in anderen Zeiten als dem Test-Intervall erfaßt wird, um den Schwellwert der Reduzierungsmittel einzustellen.

6. Anordnung nach Anspruch 1, **dadurch gekennzeichnet**,
daß die Bildröhre (40) eine Farbbildröhre mit drei Kathoden ist;
daß der Videosignal-Verarbeitungskanal (20, 30) drei Bildröhren-Ansteuerverstärker (30) enthält, die jeweils mit einer der drei Kathoden (R, G, B) verbunden sind, um drei Farb-Video-Ausgangssignale zu erzeugen, die zur direkten Ansteuerung jeweils einer der drei Kathoden der Bildröhre (40) geeignet sind;
daß der Videosignal-Verarbeitungskanal (20, 30) enthält: Mittel, um die drei Farb-Video-Ausgangssignale während eines Test-Intervalls auf entsprechende Test-Pegel festzulegen; drei jeweils mit den drei Kathoden (R, G, B) verbundene Mittel zur Erfassung von drei entsprechenden Kathodenströmen während des Test-Intervalls; und Mittel (20, 70) zur Einstellung einer Eigenschaft der drei Video-Ausgangssignale in Abhängigkeit von den drei während des Test-Intervalls erfaßten Kathodenströmen;
daß die Videosignal-Sensormittel (90) drei Kathodenstrom-Sensormittel (D4) enthalten; und
daß die Schwellwert-Einstellmittel (70b) auf eine Kombination der drei von den Kathodenstrom-Sensormitteln erfaßten Kathodenströme während anderer Zeiten als dem Test-Intervall ansprechen, um den Schwellwert der Reduzierungsmittel einzustel-len.

7. Anordnung nach Anspruch 1, **dadurch gekennzeichnet**,
daß das die Bildeigenschaft bestimmende Merkmal des Video-Ausgangssignals die Spitze-zu-Spitze-Amplitude des Video-Ausgangssignals und die Bildeigenschaft der Kontrast ist.

## Revendications

1. Appareil de limitation de courant de faisceau destiné à être utilisé dans un système de visualisation, appareil comprenant:
un canal de traitement de signaux vidéo (20, 30) pour traiter un signal d'entrée vidéo en vue de produire un signal de sortie vidéo pouvant être visualisé;
une alimentation (50, 51, 60);
un dispositif de visualisation d'image (40) couplé audit canal de traitement de signaux vidéo (20, 30) et à ladite alimentation (50, 51, 60) et tirant son courant de ladite alimentation en réponse audit signal de sortie vidéo;
un moyen (70a) couplé à ladite alimentation pour détecter le courant moyen tiré par ledit dispositif de visualisation de ladite alimentation (50, 51, 60);
un moyen (20, 70a) couplé entre ledit canal de traitement de signaux vidéo (20, 30) et ledit moyen de détection de courant moyen (70a) pour réduire une caractéristique de détermination de propriété d'image dudit signal de sortie vidéo quand ledit courant moyen tiré par ledit dispositif de visualisation de ladite alimentation (50, 51, 60) dépasse un seuil contrôlable;
un moyen (90) couplé audit canal de traitement de signaux vidéo (20, 30) pour détecter l'amplitude dudit signal de sortie vidéo; et caractérisé par un moyen (70b) couplé audit moyen de réduction (20, 70a) pour établir ledit seuil dudit moyen de réduction (20, 70a) en réponse à l'amplitude du signal de sortie vidéo.

2. Appareil défini à la revendication 1, caractérisé en ce que:
ledit dispositif de visualisation (40) est couplé à une première borne (51) de ladite alimentation (50, 51,60);
ledit moyen de détection de courant moyen (70a) comporte un circuit de filtre (R2, C2) couplé à une deuxième borne de ladite alimentation (50, 51, 60) pour filtrer un courant fourni audit dispositif de visualisation (40); et
ledit moyen d'établissement de seuil (70b) comporte une source de courant contrôlable (110) sensible à l'amplitude dudit signal de sortie vidéo et couplée audit circuit de filtre pour alimenter en courant ledit circuit de filtre.

3. Appareil défini à la revendication 1, caractérisé en ce que:
ledit dispositif de visualisation (40) est un tube-image comportant au moins une cathode (R, V, B);
ledit canal de traitement de signaux vidéo (20, 30) comporte un amplificateur d'attaque de tube-image (30) couplé à ladite cathode (R, V, B) pour produire ledit signal de sortie vidéo de manière à ce qu'il puisse attaquer directement ladite cathode dudit tube-image (40);
ledit moyen de détection de signal vidéo (90) comporte un élément de détection de courant (D4) couplé à ladite cathode (R, V, B); et
ledit moyen d'établissement de seuil (70b) est sensible au courant détecté par ledit moyen de détection de courant (D4) pour établir ledit seuil dudit moyen de réduction (70a).

4. Appareil défini à la revendication 1, caractérisé en ce que:
ledit dispositif de visualisation (40) est un tube-image couleur comportant trois cathodes (R, V, B);
ledit canal de traitement de signaux vidéo (20, 30) comporte trois amplificateurs d'attaque de tube-image (30) couplés à des cathodes respectives desdites cathodes (R, V, B) pour produire trois signaux de sortie vidéo respectifs pouvant attaquer directement des bornes respectives desdites cathodes dudit tube-image (40);
ledit moyen de détection de signal vidéo (90) comporte trois éléments de détection de courants (D4) couplés à des cathodes respectives des cathodes dudit tube-image; et
ledit moyen d'établissement de seuil (70b) est sensible à une combinaison des trois courants de cathodes détectés par lesdits éléments de détection de courants (D4) pour établir ledit seuil dudit moyen de réduction (70a).

5. Appareil défini à la revendication 1, caractérisé en ce que:
ledit dispositif de visualisation (40) est un tube-image comportant au moins une cathode (R, V, B);
ledit canal de traitement de signaux vidéo (20, 30) comporte un amplificateur d'attaque de tube-image (30) couplé à ladite cathode (R, V, B) pour produire ledit signal de sortie vidéo de manière à ce qu'il puisse attaquer directement ladite cathode dudit tube-image (40);
ledit canal de traitement de signaux vidéo (20, 30) comporte aussi un moyen pour fixer ledit signal de sortie vidéo à un niveau de test prédéterminé durant un intervalle de test; un moyen (90) couplé à ladite cathode pour détecter le courant passant à ladite cathode durant ledit intervalle de test; et un moyen (20, 70) pour régler une caractéristique dudit signal de sortie vidéo en réponse au courant de cathode détecté durant ledit intervalle de test;
ledit moyen de détection de signal vidéo (90) comprend ledit moyen couplé à ladite cathode pour détecter le courant passant vers ladite cathode durant ledit intervalle de test; et
ledit moyen d'établissement de seuil (70b) est sensible au courant détecté par ledit moyen de détection de courant de cathode durant des temps autres que ledit intervalle de test pour fixer ledit seuil dudit moyen de réduction.

6. Appareil défini à la revendication 1, caractérisé en ce que:
ledit tube-image (40) est un tube-image couleur comportant trois cathodes;
ledit canal de traitement de signaux vidéo (20, 30) comporte trois amplificateurs d'attaque de tube-image (30) couplés à des cathodes respectives desdites trois cathodes (R, V, B) pour produire trois signaux de sortie vidéo couleur respectifs pour attaquer directement des cathodes respectives desdites trois cathodes (R, V, B) dudit tube-image (40);
ledit canal de traitement de signaux vidéo (20, 30) comporte un moyen pour fixer lesdits trois signaux de sortie vidéo à des niveaux de test respectifs durant un intervalle de test; trois moyens couplés à des cathodes respectives desdites trois cathodes (R, V, B) en vue de détecter trois courants de cathodes respectifs durant ledit intervalle de test; et un moyen (20, 70) pour régler une caractéristique desdits trois signaux de sortie vidéo en réponse auxdits trois courants de cathodes détectés durant ledit intervalle de test;
ledit moyen de détection de signal vidéo (90) comporte lesdits trois éléments de détection de courants (D4); et
ledit moyen d'établissement de seuil (70b) est sensible à une combinaison desdits trois courants de cathodes détectés par lesdits éléments de détection de courants de cathodes en dehors dudit intervalle de test pour établir ledit seuil dudit moyen de réduction.

7. Appareil défini à la revendication 1, caractérisé en ce que:
ladite caractéristique de détermination de propriété d'image dudit signal de sortie vidéo est l'amplitude de pic à pic dudit signal de sortie vidéo et ladite propriété d'image est le contraste.
